# EUROPEAN PATENT APPLICATION

(11) **EP 4 661 406 A1**
(43) Date of publication of application: **10.12.2025**
(21) Application number: 24179998.0
(22) Date of filing: 04.06.2024
(51) Int. Cl.: H04N 21/422, H04N 21/43, H04N 21/442, H04N 21/454, H04N 21/4627, H04N 21/658

(54) **METHOD FOR ENHANCED CONTENT DISTRIBUTION**

(71) Applicant: Nagravision Sàrl, 1033 Cheseaux-sur-Lausanne (CH)
(72) Inventor: BORRONI, Roberto, 1033 Cheseaux-sur-Lausanne (CH); KWAAITAAL, Johannes August, 1033 Cheseaux-sur-Lausanne (CH)
(74) Representative: Novagraaf International SA

(57) **Abstract**

The method comprising the steps of:
A- detecting, by a first device (100) connected with a display screen (150), if a second device (200) is present in a viewing area (A1) of the display screen (150), said viewing area (A1) having predetermined boundaries (156, 157, 158), using a wireless communication technology allowing for a positioning of the second device (200) in space,
B- in response to a positive detection in the step A, executing a predetermined process.

## Description

### TECHNICAL FIELD

The present disclosure relates to content distribution to user devices, via the Internet, for example through Over-The-Top (OTT) media services, or via conventional distribution channels like cable, satellite, terrestrial broadcasting stations, etc. The invention focuses on enhancing the distribution and delivery of content to users.

### BACKGROUND

OTT media service providers play a significant role in the digital media landscape by delivering contents directly to users over the Internet, bypassing traditional broadcasters, cable networks, and satellite platforms. They offer a variety of streaming services to users. Examples of OTT service providers include Netflix, Amazon Prime Video, Hulu, Disney+, HBO Max, Apple TV+, etc.

A main role of OTT platforms is to distribute films, television shows, music, and other contents more directly to users. OTT platforms provide on-demand access to a vast content library, allowing users to watch what they want, when they want, and often on any device they choose. This convenience has significantly modified viewing habits.

With the rise of OTT platforms, there's been a surge in the production of original contents. Further, OTT services often use advanced algorithms to filter contents pushed to users based on their viewing history and preferences. Such filtering enhances user experience by helping users discover new contents that align with their interests. It may also allow to reduce bandwidth usage.

There is a continual need for OTT media service providers to develop technical improvements that can enhance their operational efficiency in various areas such as content access, user interface, user experience, security, parental control, interactivity, audience measurement, user-based content targeting, etc.

### SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

The present disclosure concerns a method comprising the steps of:
A- detecting, by a first device connected with a display screen, if a second device is present in a viewing area of the display screen, said viewing area having predetermined boundaries, using a wireless communication technology allowing for a positioning of the second device in space,
B- in response to a positive detection in the step A, executing a predetermined process.

The method uses a wireless communication technology, such as UWB (Ultra-Wideband), for precise positioning of a device within a specific viewing area of a display screen. The method can detect the presence of a device with high accuracy, such as within a centimeter-level or decimeter-level, within the predefined viewing area. This accurate detection enables various functionalities based on the presence of the device, including targeted content delivery, audience measurement, seamless device switching, user authentication, and automatic activation of certain applications like a remote control. This technology offers an enhanced user experience and operational efficiency for content providers, avoiding the limitations of camera-based or infrared systems.

In an embodiment, in the step B, the predetermined process may be based on information characterizing a user of the second device.

In an embodiment, in the step B, the predetermined process may include a step of transmitting presence data indicative of the presence of the second device within the viewing area of the display screen to a content provider system.

In an embodiment, the method may comprise a step of displaying a content on the display screen connected with the first device.

In an embodiment, in the step B, the predetermined process may be based on the displayed content.

For example, the presence data may include audience data and, in the step B, the predetermined process may include a step of audience measurement to determine audience metrics related to the content displayed on the display screen, based on said audience data.

The predetermined process may include:
- a step of monitoring activity of the second device (200) in the viewing area ;
- if inactivity of the second device is detected during a period exceeding a predetermined time threshold, a step of decreasing a confidence level associated with a state of presence of a user of the second device within the viewing area;
wherein said confidence level is used in the determination of the audience metrics.

In an embodiment, in the step B, the predetermined process may include a step of switching the display of the content from a display screen of the second device to the display screen of the first device.

In an embodiment, the method may further comprise, upon detection, in the step A, that the second device is no longer present in the viewing area of the display screen connected with the first device, a step of switching the display of the content from the display screen connected with the first device to a display screen of the second device.

In an embodiment, the method may further comprise:
- after detection, in the step A, that the second device is no longer present in the viewing area of the display screen connected with the first device, a step of detecting if the second device is present in another viewing area associated with a third device using the wireless communication technology allowing for the positioning of the second device in space; and
- in a positive event, a step of switching the display of the content from the display screen of the first device to a display screen of the third device.

In an embodiment, in the step B, the predetermined process may comprise a step of updating an history of contents viewed by a user of the second device.

In an embodiment, in the step B, the predetermined process may include:
- selecting a supplementary content from a content database based on the second device and/or the content displayed on the display screen connected with the first device;
- transmitting the supplementary content to the first device and/or the second device to display it.

In an embodiment, in the step B, the predetermined process may include updating a score assigned to a user of the second device based on the displayed supplementary content.

In an embodiment, in the step B, the predetermined process may include adjusting content data transmitted to the first device based on a user profile of a user of the second device.

In an embodiment, in the step B, the predetermined process may include:
- determining if the user of the second device is responsible for managing parental controls to regulate what contents can be viewed on the first device;
- in a positive event, unsetting the parental controls on the first device.

In an embodiment, in the step B, the predetermined process may include:
- determining if parental controls are set for a user of the second device;
- in a positive event, setting said parental controls on the first device to regulate what contents can be viewed on the first device.

In an embodiment, in the step B, the predetermined process may include:
- a step of generating a token including an identifier of the second device and/or of a user of the second device and an indication that the second device is present in the viewing area of the display screen connected with the first device; and
- an authentication step wherein said token is used as an authentication factor.

In that case, if the authentication step has succeeded, the predetermined process may further include a step of granting first device access to resources.

In an embodiment, the second device being a communication device connected to a communication network, in the step B, the predetermined process may include a step of providing the first device with an access to the communication network via a wireless connection with the second device.

In an embodiment, in the step B, the predetermined process may include a step of automatically executing a software application by a processor of the second device or first device.

For example, the software application may be an application of remote control to remotely operate the first device from the second device.

In an embodiment, in the step B, the predetermined process may include:
- a step of monitoring an orientation of the second device; and
- a step of automatically executing the software application of remote control upon detection that the orientation of the second device points to the display screen connected with the first device.

For example, the software application may be an application related to the content displayed on the display screen connected with the first device to allow for interactions between the second device and the displayed content through inputs and/or movements of the second device, through a communication network.

In an embodiment, the second device may communicate with the first device to obtain entitlement information of the first device, and check if the first device has public performance rights to legally display the content in a public area based on the entitlement information.

The wireless communication technology allowing for positioning with centimeter-level accuracy may be Ultra-Wideband, UWB, technology.

The present disclosure also concerns a system comprising a first device, a second device and a content provider system, configured to perform the steps of the method previously defined.

Each of the first and second devices may comprise means for performing one or more or all steps of the method according to the first aspect. The means may include at least one processor and at least one memory storing instructions that, when executed by the at least one processor, cause the apparatus to perform one or more or all steps of a method according to the first aspect. The means may include circuitry (e.g. processing circuitry) to perform one or more or all steps of a method according to the first aspect.

According to another aspect, a computer program comprises instructions that, when executed by a processor, cause the processor to perform one or more or all steps of a method previously defined.

### BRIEF DESCRIPTION OF DRAWINGS

FIG. 1 illustrates a system diagram showing a first device, a second device, and a content provider system, according to an embodiment.
FIG. 2 illustrates a flow chart diagram for executing a predetermined process based on detection of the presence of the second device in a viewing area of a display screen of the first device, according to an embodiment.
FIG. 3 illustrates a flow chart diagram, related to the predetermined process represented in FIG. 2, for audience measurement based on device detection and activity monitoring, according to an embodiment.
FIG. 4 illustrates a flow chart diagram, related to the predetermined process represented in FIG. 2, for content display switching between devices based on the second device's location, according to an embodiment.
FIG. 5 illustrates a flow chart diagram, related to the predetermined process represented in FIG. 2, for content display switching between devices based on the second device's location, according to another embodiment.
FIG. 6 illustrates a flow chart diagram, related to the predetermined process represented in FIG. 2, for a process of displaying a supplementary content, according to an embodiment.
FIG. 7 illustrates a flow chart diagram, related to the predetermined process represented in FIG. 2, for parental control management, according to an embodiment.
FIG. 8 illustrates a flow chart, related to the predetermined process represented in FIG. 2, for parental control management, according to another embodiment.

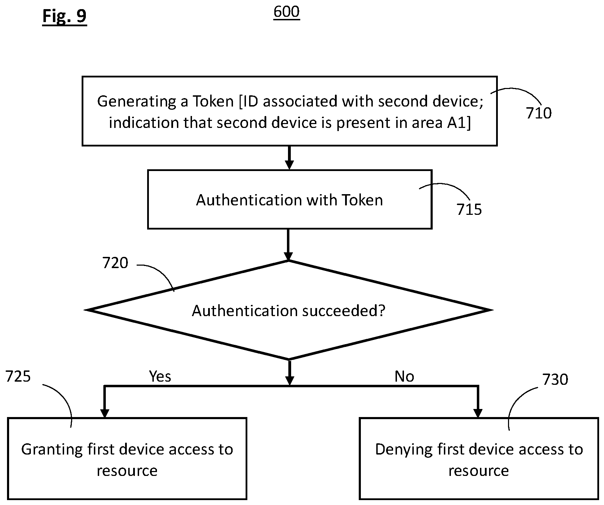

FIG. 9 illustrates a flow chart diagram, related to the predetermined process represented in FIG. 2, for user authentication, according to an embodiment.

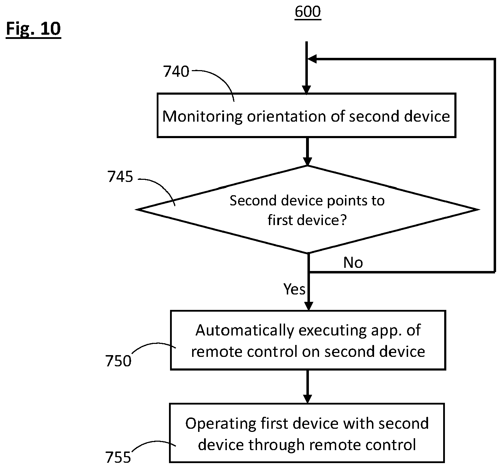

FIG. 10 illustrates a flow chart diagram, related to the predetermined process represented in FIG. 2, for remote control of the first device, according to an embodiment.
FIG. 11 illustrates a flow chart diagram, related to the predetermined process represented in FIG. 2, for updating a user history of watched contents, updating a user's score, adjusting content data transmitted, automatically executing an application, and checking entitlement of the first device, according to various embodiments.

### DETAILED DESCRIPTION

Existing solutions for determining the presence of a user in front of a television (TV) set or monitor or similar display device rely on various technologies, such as infrared sensors, cameras, or Bluetooth transceivers. These methods, however, have limitations. For instance, camera-based systems raise privacy concerns and may require line-of-sight to function effectively. Infrared sensors, on the other hand, can be limited in their range and accuracy, and may not be able to provide detailed information about the user's position or identity. The Bluetooth technology does not allow to ensure the user is in front of a TV screen. Additionally, these traditional methods may not seamlessly integrate with the growing ecosystem of connected devices, limiting their utility for personalized user experiences and content delivery.

A wide range of Ultra-Wideband (UWB) technology has emerged as a solution for precise positioning and wireless short-range communication between devices. UWB enables devices to determine the position of other devices with high accuracy in terms of both distance and angle. This capability allows for enhanced device interactions and user experience. The integration of UWB technology into a wide range of devices like smartphones and wearable devices, allows for enhancing the operational efficiency of content providers in various technical areas such as content access, user interface, user experience, security, parental control, interactivity, audience measurement, user-based content targeting, that leverage precise positioning for example within home environment.

The present system and method address these and other issues by utilizing a wireless communication technology allowing for device's positioning in space, such as the UWB technology, to accurately detect the presence of a user's device within a defined viewing area of a display screen. This wireless communication technology advantageously allows for positioning a device in space with high precision, for example with a centimeter-level accuracy or a decimeter-level accuracy. The system can determine the presence of a device within a specific, predefined area, termed as viewing area, in front of a display screen, such as within a 30-degree angle and a distance of up to 3 meters for example. This precise detection allows for a variety of predetermined functionalities that are all based on presence detection of the device within this specific viewing area, such as targeted, personalized and/or filtered content delivery, refined audience measurement, switching between devices for displaying content as a user moves to follow the user, seamless user authentication to access resources like TV channels, contents, data, services, systems, etc., automatic activation of applications like remote control, without the drawbacks associated with camera-based or infrared systems. The system leverages the capabilities of a wireless communication technology, such as UWB, allowing for device's positioning in space to enhance operational efficiency of content providers and user experience, and to provide value-added functionalities to both users and content providers.

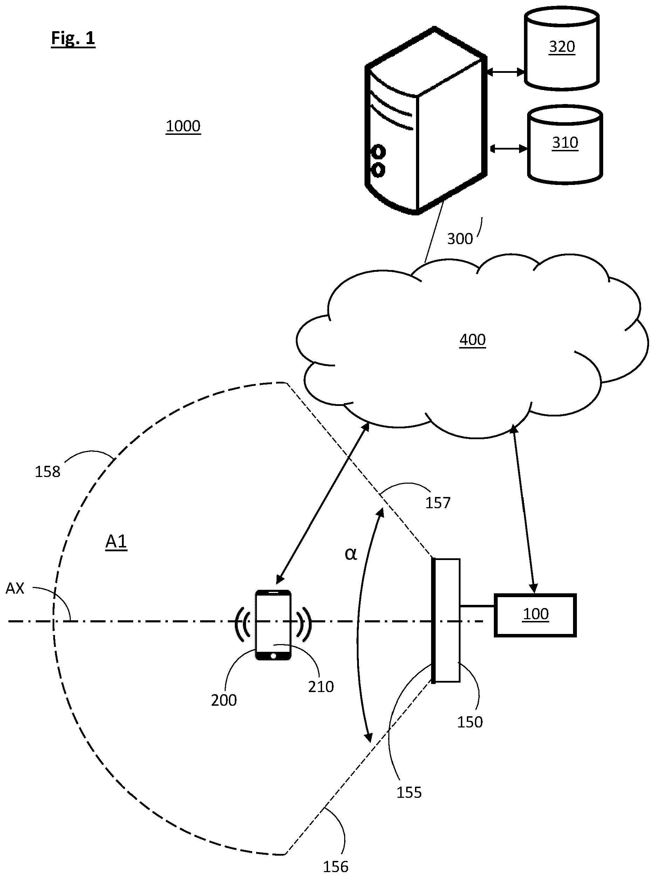

FIG. 1 illustrates a system 1000 for distributing contents to user devices according to a particular embodiment. The system 1000 including a content provider system (CPS) 300, a communication network 400, a first computing device 100 connected with a display screen or display or display device 150, and a second computing device 200.

A role of the content provider system or CPS 300 is to provide or deliver digital contents, such as videos, images, metadata, and/or other data (e.g., user data), to user devices (e.g., first device 100 and/or second device 200), through the communication network 400. The content provider system or CPS 300 may include or be connected with:
- a content storage and management system 310 configured to manage and store a library of contents, including videos, images, and metadata; and
- a user management system 320 configured to manage and store user data (e.g., user identification information, user attributes, user preferences, user subscription(s), user rights and/or restrictions, etc.), and carry out operations and/or functionalities such as authentication, content recommendations, analytics, etc.

The communication network 400 can include one or more communication networks that may be interconnected (e.g., local area network(s) (LAN), wide area network(s) (WAN), the internet, mobile network(s), universal mobile telecommunications system (UMTS), content delivery network (CDN), etc.). The communication network 400 may provide bidirectional (two-way) communications or unidirectional (one-way) communications. The first device 100 and/or the second device 200 are connected to the communication network 400. They may be both connected to the communication network 400. Alternatively, only one of the first and second devices 100, 200, for example the second device 200, is connected to the communication network 400.

The first device 100 is configured to acquire and/or receive a content from the content provider system CPS 300 through the communication network 400 and control displaying or projecting or rendering said content on the display screen 150. The display screen can be a television, a monitor or any other type of display or rendering device. The first device 100 may include a set-top box, a CAM (Conditional Access Module) module, a HDMI stick or dongle that can be plugged into an HDMI port of the display device 150, or a USB stick or dongle that can be plugged into a USB port of the display device 150. Alternatively, the first device 100 and the display device 150 may be combined. For example, the first device 100 may be included in the display device 150 (e.g., a TV set).

The first device 100 may be connected to the communication network 400.

The first device 100 is provided or equipped with a wireless communication technology allowing for the positioning of other devices in space. In an embodiment, the first device 100 is an UWB-enabled device (i.e., a device equipped with the UWB technology).

The display screen 150 is a visual output device capable of presenting visual contents, such as images, videos, or other graphical contents. It is connected with the first device 100.

The display screen 150 may be external to the first device 100. Alternatively, the display screen 150 and the first device 100 may be combined in one device. In any case, the display screen 150 and the first device 100 are connected together.

The display screen 150 includes a display surface 155 on which a content (e.g., video, image and/or metadata) can be displayed, rendered, or projected. The display screen 150 is associated with a viewing area A1. This viewing area A1 is a spatial volume in front of the display screen 150, more precisely in front of the surface 155, where a displayed content is visible. It may be an area in space or a spatial region, advantageously in three dimensions or 3D, within which images displayed or projected or rendered on the display screen 150 can be viewed with acceptable visual performance allowing to maintain predetermined visual performance parameters, such as parameters of color accuracy, brightness, and contrast, at acceptable levels that may be close or rather close to what a user can optimally see when looking directly at the display screen 150 (i.e., from an optimal position in front of the display screen 150). As an illustrative and non-limitative example, each predetermined visual performance parameter may be above 50%, preferably above 75%, more preferably above 90% of a reference or optimal value of said visual performance parameter.

The viewing area A1 can have predetermined boundaries. These predetermined boundaries can be defined with respect to the display surface 155.

The viewing area A1 and its boundaries may be set or configured for example within the first device 100. The viewing area A1's setting or configuration may include specific geometric parameters defining the boundaries of the viewing area A1. These parameters may be pre-stored, learned, and/or entered by a user.

The parameters defining the boundaries of the viewing area A1 can include at least one predefined maximum viewing angle and at least one predefined maximum viewing distance, with respect to the display device 150.

In an embodiment, the display surface 155 can have a rectangular plane shape with a long length side, for example horizontal, and a short length side, for example vertical. As shown in figure 1, the predetermined boundaries of the viewing area A1 can for example include, in any plane across the display surface 155 that is parallel to the long length side of the display surface 155 and orthogonal to the display surface 155:
- two linear segments 156, 157 that each originate from a peripheral point on respective sides of the display surface 155 and deviate from each other symmetrically with respect to a central axis AX orthogonal to the surface 155 by forming a predetermined angle α (e.g., 30°) between them;
- an arc of circle 158 having two ends connecting the respective free ends of the two line segments 156, 157, the maximal distance between a point of the arc of circle and the plane of the display surface 155 corresponding to a predetermined maximum viewing distance, for example 3 meters.

Optionally, the predetermined boundaries can further include two linear segments and an arc of circle, as above defined, but in any plane across the display surface 155 that is parallel to its short length side and orthogonal to the display surface 155.

However, it is pointed out that viewing area A1 is not limited to the above-described geometric shape but may have any other suitable geometric shape defining a spatial volume within which contents displayed or rendered or projected on the display screen 150 can be viewed for example with acceptable, predefined visual performance.

In another embodiment, the viewing area A1 may be limited by physical boundaries of a room or space where the display device 150 is placed in, in particular if the display device 150 is placed on a wall of the room.

It should be noted that, as the first device 100 (e.g., a set-top-box) may be separate or distinct from the display device 150 to which it is connected, the two devices 100, 150 may not be exactly at the same place. Therefore, the viewing area A1 may need to be configured or set within the first device 100 for example by a user through a user interface of the first device 100, or through a learning or configuration process carried out by the first device 100 in an autonomous or partially autonomous manner. The second device 200 may require the first device 100 to carry out this setting of the viewing area A1, for example upon connection of the first and second devices 100, 200.

The first device 100 may be implemented with hardware and software. It may include at least one processor and at least one memory storing instructions that, when executed by the at least one processor, cause the first device 100 to perform one or more or all steps of any method described later. The first device 100 may include one or more communication interfaces connected to the processor and configured to communicate via wired or wireless communication link(s). The operations, function, and/or actions that the first device 100 is configured to carry out will be described in more detail in the description of the method 500.

The second device 200 may be a wearable or mobile device, such as a smartphone, smartwatch, smart bracelet, fitness tracker, earbud(s), smart ring, tablet, or any other type of wearable device. This second device 200 may be associated with a single user U that is entitled to use it. In an embodiment, the second device 200 can connect to the communication network 400 and optionally interact with the content provider system or CPS 300.

The second device 200 may be implemented with hardware and software. It may include at least one processor and at least one memory storing instructions that, when executed by the at least one processor, cause the second device 200 to perform one or more or all steps of any method described later. The operations, function, and/or actions that the second device 200 is configured to carry out will be described in more detail in the description of the method 500.

The second device 200 may include one or more communication interfaces connected to the processor and configured to communicate via wireless or wired communication link(s).

Optionally, the second device 200 may include a display screen or display 210.

The second device 200 is provided with a wireless communication technology allowing for positioning of other devices or objects in space. In an embodiment, the second device 200 is an UWB-enabled device (i.e., a device equipped with the UWB technology).

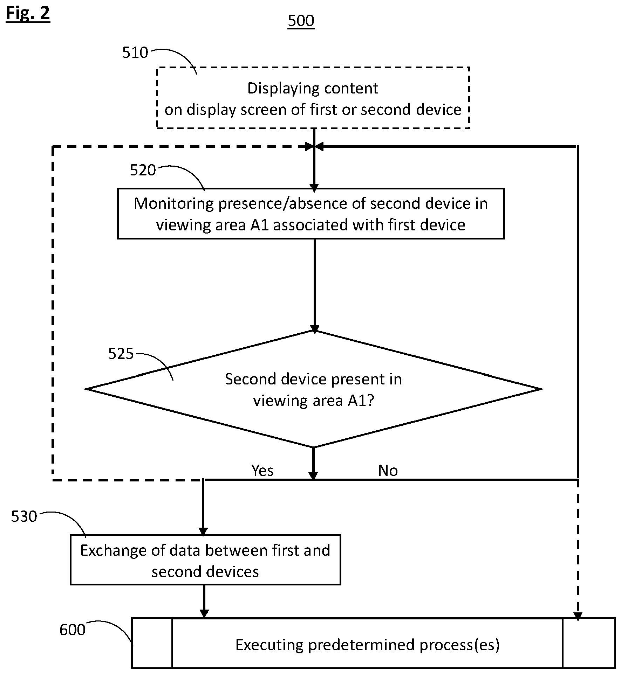

FIG. 2 shows a method 500 for performing a predetermined process 600 based on detection of the presence of the second device 200 within the predetermined viewing area A1 associated with the first device 100, according to an embodiment. The method 500 can be implemented by the system 1000.

The method 500 may include a preliminary step 510 of displaying a content on the display screen of the first device 100 or second device 200. The content may be received by the first device 100 or second device 200 from the content provider system or CPS 300 through the communication network 400, and then displayed on the display screen of the first device 100 or on the display screen 210 of the second device 200. In some embodiments, the preliminary step 510 may be optional.

The method 500 includes a step 520, performed by the first device 100, of monitoring the viewing area A1 of the display screen 150 to detect if a device, for example the second device 200, is present in the viewing area A1. The detection of the presence of the second device 200 within the viewing area A1 associated with the first device 100 is performed using a wireless communication technology, for example the UWB technology, allowing for the positioning of the second device 200 in space. The use of UWB technology allows the first device 100 to precisely determine the position of the second device 200 in space and to accurately detect if the second device 200 is present within the viewing area A1 where a content displayed by the display screen 150 can be viewed with acceptable visual performance. The first device 100 can achieve this determination for example with a precision of a few decimeters, or a few centimeters or less, which is significantly better than other wireless technologies like Wi-Fi or Bluetooth.

If the presence of the second device 200 is detected by the first device 100 within the viewing area A1 in the monitoring step 520 (step 525: Yes), the method 500 may then include a communication step 530 in which the first device 100 and the second device 200 transmit data to one another or exchange data. Example of communicated or exchanged data may include device identification data, user identification data, content identification data identifying a content (e.g., movie, TV channel, service, etc.) displayed on the display screen of the first device 100 or second device 200, and/or any other appropriate data that may be useful particularly to carry out the predetermined process 600.

Then, if the presence of the second device 200 has been detected in the viewing area A1 (step 525: Yes), the method 500 executes the predetermined process 600. This process 600 may include a variety of functionalities and/or operations such as personalized content delivery, audience measurement, user authentication, parental control management, etc. which are triggered by the positive detection of the second device 200 within the viewing area A1, as will be described later in various embodiments.

The process 600 may include transmitting presence data indicative of the presence of the second device 200 within the viewing area A1 of the display screen 150, associated with the first device 100, to the content provider system 300. The presence data can be transmitted by the first device 100, or alternatively by the second device 200.

In some embodiments, the process 600 is based on information characterizing the user U of the second device 200, such as the identity, age, gender, location, and/or any other attributes or characteristics of the user of the second device 200.

Advantageously, the process 600 may be carried out in a manner that meets privacy regulation requirements (e.g., the General Data Protection Regulation (GDPR) that regulates the collection, storage, and use of personal data in European Union (EU)).

The monitoring step 520 may be continuously executed to monitor the viewing area A1 for the purpose of detecting the presence or absence of the second device 200 within the viewing area A1. In some embodiment, the monitoring step 520 may be executed only when a content is being displayed on the display screen 150 of the first device 100. Alternatively, the monitoring step 520 may be executed by the first device 100, whether a content is being displayed on the display screen 150 or not.

Further, the monitoring of the viewing area A1 may be continued after detecting the presence of the second device 200 within the viewing area A1, particularly for the purpose of detecting if the second device 200 has moved and left the viewing area A1.

### First Embodiment

In a first embodiment, the predetermined process 600 is for audience measurement. If the second device 200 is present in the viewing area A1 of the display screen 150 of the first device 100, it is highly probable that the user U of the second device 200 is present within the viewing area A1 and that, if a content is being displayed on the display screen 150, this user U is viewing the content.

Optionally, if the presence of the second device 200 is detected in the viewing area A1, a monitoring of the second device's activity can be performed to evaluate the probability that the user U is present in the viewing area A1.

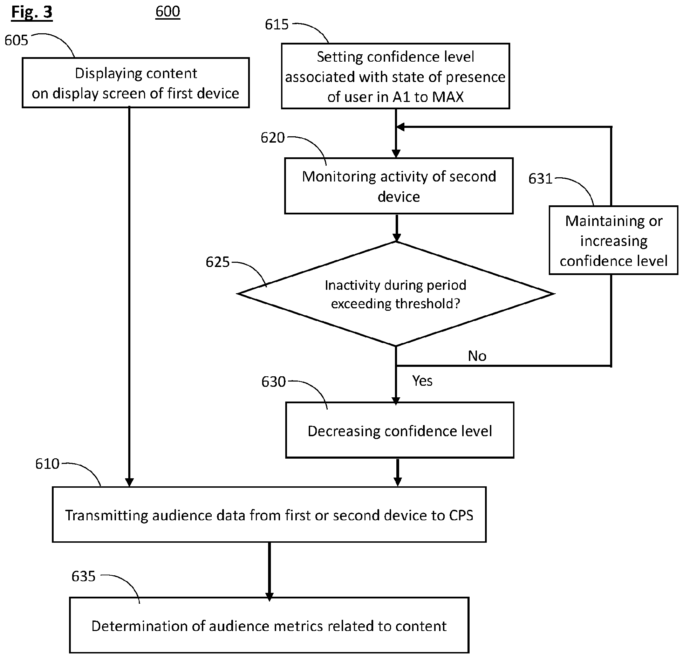

FIG. 3 shows a process 600 for audience measurement related to a content being displayed, according to the first embodiment.

At step 605, a content is being displayed on the display screen 150 of the first device 100.

The step 605 may correspond to the step 510 that is continued after detection of the presence of the second device 200 in the viewing area A1 (step 520 and step 525: Yes).

Alternatively, the display or rendering of the content on the display screen 150 of the first device 100 is started or triggered upon detection of the second device 200 within the viewing area A1. In an embodiment, the content may be initially displayed on the display screen 210 of the second device 200, and the display or rendering of the content may be continued on the display screen 150 of the first device 100 after switching from the display screen 210 of the second device 200 to the display screen 150 of the first device 100 upon detection of the second device 200 within the viewing area A1, as described later. In another embodiment, the content may be initially displayed on the display screen of a third device, and the display or rendering of the content may be continued on the display screen 150 of the first device 100 after switching from the display screen of this third device to the display screen 150 of the first device 100 upon detection of the second device 200 within the viewing area A1, as described later.

At step 610, the process 600 involves transmitting audience data to the content provider system CPS 300 through the communication network 400. The audience data may be transmitted from the first device 100. Alternatively, or additionally, it may be transmitted from the second device 200.

The audience data includes data of one or more appropriate types to analyze the behavior, preferences and/or demographics of an audience related to the content displayed on the display screen 150 of the first device 100 in the step 605. Examples of audience data include at least part of:
- data about a number N of users watching the content (e.g., N=1 if the second device 200 is the single device detected in the viewing area A1, or N=2 or more if two or more wearable devices or second devices are detected in the viewing area A1);
- content data that can include information identifying the content being displayed on the first device 100;
- demographic data that can include information about the age, gender, location, and/or any other data that is appropriate to segment the audience into demographic groups;
- geolocation data including information about the geographic location of the audience, which can be detailed down to the city or region level, often collected through IP addresses;
- engagement data that can include metrics like time spent in the viewing area A1 or any other metric suitable to measure how user(s) interacts or is engaged with the content;
- etc.

The above examples of audience data are only illustrative and non-limitative.

Some audience data transmitted by one of the first and second devices to the content provider system 300 may be received from the other of the first and second devices in the data exchange step 530.

The audience data from multiple devices can be collected by the content provider system 300 to measure different types of audience metrics. The audience metrics are quantitative measures used to assess the characteristics and/or behaviors of an audience engaged with a particular content (here, the content displayed by the first device 100). At step 635, the process 600 includes the determination of audience metrics related to the displayed content based on the audience data collected from multiple devices (including the first device 100). This step 635 can be performed by the content provider system 300.

Optionally, the process 600 may include a monitoring of activity of the second device 200 present within the viewing area A1 to determine and adjust a confidence level or confidence value associated with a state of presence of the user U of the second device 200 within the viewing area A1. This confidence level represents a degree of certainty or probability that the user U of the second device 200 is present within the viewing area A1 (i.e., a confidence level associated with a state of presence of second device's user in viewing area A1). When the second device 200 enters the viewing area A1 and is first detected within the viewing area A1 by the first device 100, this confidence level may be set to a maximal value MAX, for example between 90% and 100%, in a step 615.

The process 600 may then include, at step 620, monitoring the activity of the second device 200 to detect if the second device 200 is involved in any activity that requires the user U to wear or hold or touch the second device 200 and/or to be positioned close to the second device 200. The monitoring step 620 is carried out if the presence of the second device 200 is detected within the viewing area A1. The monitoring of the second device's activity can be performed by the first device 100, for example based on UWB signals and/or data exchanged between the first device 100 and the second device 200. For example, the first device 100 may determine if the second device 200 is moved and/or touched.

If inactivity of the second device 200 is detected during a period exceeding a predetermined time threshold (step 625: Yes), the confidence level is decreased in a step 630. The longer the period without activity, the more the level of confidence may be decreased. If an activity of the second device 200 within the viewing area A1 can be detected (step 625: No), the confidence level may remain at its maximal value MAX or be increased to the maximal value MAX.

Further, if the user switches from one content to another content, for example from one TV channel to another TV channel, using a remote, the confidence level may be updated to its maximal value MAX.

The determined confidence level can be transmitted from the first device 100 to the content provider system 300 along with the audience data, in the step 610. It may be part of the audience data.

The confidence level received by the content provider system 300 can be used in the computation or determination of the audience metrics, in the step 635. For example, it may be used to weight the audience data received from the first device 100 or second device 200. This allows to enhance the accuracy and reliability of the audience metrics determined by the content provider system 300.

The confidence level associated with a state of presence of the user U of the second device 200 in the viewing area A1, determined based on monitoring the activity of the second device 200 present in the viewing area A1, could serve in any other appropriate use.

### Second Embodiment

In a second embodiment, the predetermined process 600 is for managing the display or rendering of a content on different devices, based on the detection of presence or absence of the second device 200 within one or more viewing area(s), to follow a movement of the second device 200.

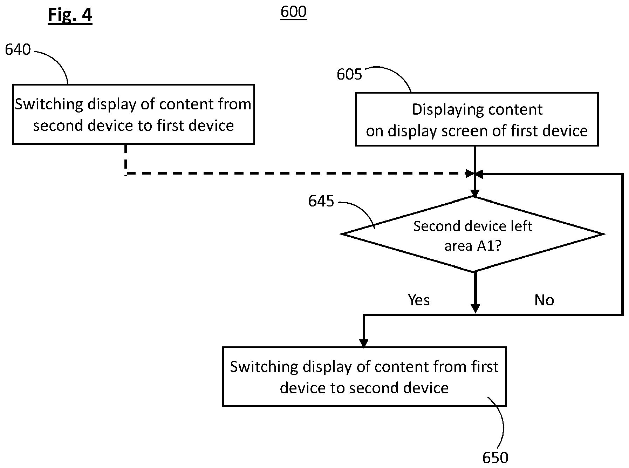

In a first variant of the second embodiment, illustrated in figure 4, the content may be initially displayed on the display screen 210 of the second device 200, and then be switched to the display screen 150 of the first device 100.

Let's consider for example that the second device 200 is initially located outside of the viewing area A1 and is displaying the content on its display screen 210 in the step 510. The content may be received by the second device 200 from the content provider system 300, for example in streaming, through the communication network 400.

The second device 200 may then move and enter the viewing area A1 associated with the display screen 150 of the first device 100.

After entry of the second device 200 into the viewing area A1, the first device 100 detects the presence of the second device 200 in the viewing area A1, in the step 520 and step 525: Yes.

In the step 530, the first and second devices 100, 200 may exchange data and/or interact with one another, as previously described.

At this stage, the predetermined process 600 according to the first variant of the second embodiment is carried out. It involves, at step 640, switching the display or rendering of the content from the display screen 210 of the second device 200 to the display screen 150 of the first device 100. For that purpose, the first device 100 and/or the second device 200 may send to the content provider system CPS 300 or to any appropriate network component (e.g., gateway, router, node, etc.) a request for switching the content's receiver from the second device 200 to the first device 100. Upon reception of this request, the content provider system CPS 300 or a network component may transmit the content to the first device 100 and optionally stop its transmission to the second device 200. The content received by the first device 100 is displayed on the display screen 150 of the first device 100.

Alternatively, the content may be received by the second device 200 and transferred to the first device 100 through a wireless communication link.

The switching from the second device 200 to the first device 100 may be carried out after execution of an authentication process between the first and/or second devices and the content provider system 300. It is noted that the use of UWB can simplify authentication by enabling it to occur locally between the first device 100 and the second device 200, also taking advantage of their physical proximity.

In a second variant of the second embodiment, illustrated in figure 4, the content may be initially displayed on the display screen 150 of the first device 100 and then be switched to the display screen 210 of the second device 200.

Let's consider for example that the content is being displayed or rendered on the display screen 150 of the first device 100 in the step 510 and/or 605, when the second device 200 is present within the viewing area A1. In this situation, the display screen 150 displays the content and the first device 100 detects the presence of the second device 200 within the viewing area A1 in the monitoring step 520 (step 525: Yes). The content may be received by the first device 100 from the content provider system 300, for example in streaming, through the communication network 400.

At some point, the second device 200 may move outside the viewing area A1 of the first device 100. As the first device 100 may continuously or periodically monitor the viewing area A1 (the monitoring step 520 can be continued during the process 600), the first device 100 may detect that the second device 200 is no longer present in the viewing area A1, in a step 645 (No).

At this stage, upon detection that the second device 200 is no longer present within the viewing area A1 (i.e., it has left the viewing area A1), the predetermined process 600 according to the present variant may go to a step 650.

At step 650, this process 600 involves switching the display or rendering of the content from the display screen 150 of the first device 100 to the display screen 210 of the second device 200. For that purpose, the first device 100 and/or the second device 200 may send to the content provider system CPS 300 and to any other appropriate network component (e.g., a router, gateway, etc.) a request for switching the receiver of the content from the first device 100 to the second device 200. Upon reception of this request, the content provider system CPS 300 may transmit the content to the second device 200 and optionally stop the content's transmission to the first device 100. The content received by the second device 200 is displayed on its display screen 210.

Optionally, this switching can be improved by temporarily using the UWB data communication capabilities between device 100 and device 200 to stream the content to device 200 when leaving the viewing area A1.

The switching may require an authentication process between the first and/or second devices and the content provider system 300. As previously indicated, the use of UWB can simplify authentication by enabling it to occur locally between the first device 100 and the second device 200, also taking advantage of their physical proximity.

In a third variant, illustrated in figure 4, the process including the sequence of steps 645 and 650 may be carried out after the step 640 of switching the display or rendering of the content from the second device 200 to the first device 100 upon entry of the second device 200 within the viewing area A1, as illustrated by the dashed arrow in figure 4.

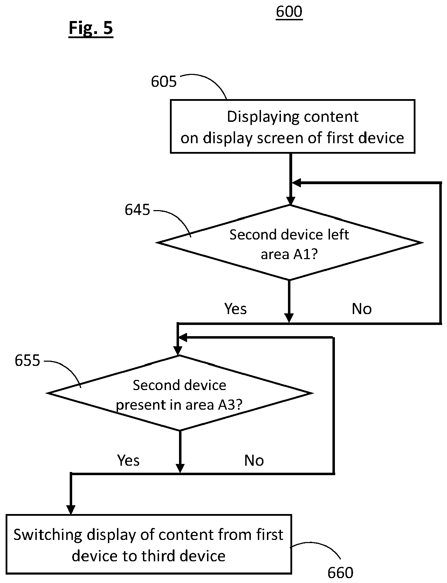

A fourth variant of the second embodiment of the process 200, illustrated in figure 5, is based on the second variant of the second embodiment but differs from it by the steps described below.

In this fourth variant, the predetermined process 600 can manage the display or rendering of the content on different devices connected with respective display screens or displays, based on the detection of presence of the second device 200 within respective viewing areas of the display screens respectively connected with the different devices, to follow a movement of the second device 200.

According to this fourth variant, the process 600 may include the step 605 of displaying the content on the display screen 150 of the first device 100 as the second device 200 is present within the viewing area A1 of the first device 100, and the step 645 of determining if the second device 200 has left the viewing area A1 (in the same manner as in the third variant of the second embodiment).

The second device 200 may then move outside the viewing area A1. At this stage, the first device 100 may determine that the second device 200 has left the viewing area A1, in a step 645 (in the same manner as in the third variant of the second embodiment).

Then, the second device 200 may enter another viewing area A3 of a display screen connected with a third device (not represented). This viewing area A3 may be distinct from the viewing area A1 associated with the first device 100. In a step 655, the third device may detect the presence of the second device 200 within its viewing area A3, using wireless communication technology allowing for positioning in space like the UWB technology. The step 655 may be analogous to the step 525.

Upon detection of the presence of the second device 200 within the viewing area A3 associated with the third device, the process 600 may involve, at step 660, switching the display or rendering of the content from the display screen 150 of the first device 100 to the display screen of the third device. For that purpose, the first device 100 and/or the third device may send to the content provider system CPS 300 or to any appropriate network component a request for switching the receiver of the content from the first device 100 to the third device. Upon reception of this request, the content provider system CPS 300 may transmit the content to the third device and optionally stop its transmission to the first device 100. The content received by the third device is displayed on the display screen of the third device.

The switching may be carried out after execution of an authentication process between the first and/or third devices and the content provider system 300. As previously indicated, the use of UWB can simplify authentication by enabling it to occur locally between the first device 100 and the second device 200, also taking advantage of their physical proximity.

Optionally, upon detection that the second device 200 has left the viewing area A1 associated with the first device 100, the display or rendering of the content may be temporarily switched from the first device 100 to the second device 200 before the sequence of steps 655 and 660 are executed.

For all embodiments involving to switch the content from one device to another device, the switching may be automatically performed or, instead, it may be performed only upon user's confirmation. If a user's confirmation is required to switch the content onto a target device, a message may be displayed and/or played on the target device, prompting the user to confirm if he wants to switch the content.

Optionally, the content could be presented in parallel on the two devices (original and target devices), at least temporarily.

For example, let's consider that the user U is watching a soccer match on the display device 150 located in a living room, and is temporarily leaving the living room with his smartphone (second device 200) in its pocket to go to a bathroom. The user may not want to automatically switch the content from the display device 150 to the smartphone 200. He can refuse the switching by not confirming the message displayed on the smartphone. In another example, let's consider that the user U is watching a soccer match on the display device 150 located in a living room with another person. During the soccer match, the user U leaves the living room to catch a train, but the other person continues watching the soccer match. In that case, the user U may not confirm the message displayed on his smartphone 200 prompting him to confirm if he wants to switch the content, to avoid the switching from the display device 150 in the living room to the smartphone 200.

### Third embodiment

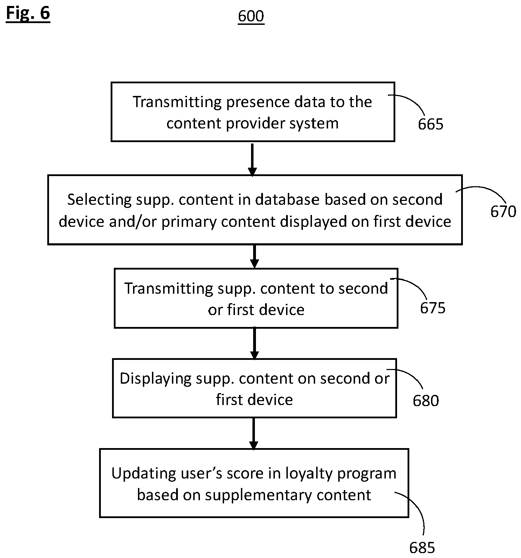

In a third embodiment, illustrated in figure 6, the predetermined process 600 is for displaying a supplementary content while a primary content is displayed on the display screen 150 of the first device 100. Examples of the supplementary content include advertisement, additional information related to the primary content, a call-to-action element in relation to the primary content, etc. The supplementary content may be selected based on the second device 200, for example based on information characterizing the user U of the second device 200 (e.g., user ID, gender, age, location, etc.), and/or based on the primary content. Further, this supplementary content may be displayed on the display screen 210 of the second device 200 or, alternatively, on the display screen 150 of the first device 100.

According to this third embodiment, at step 665, the process 600 involves transmitting presence data to the content provider system CPS 300, through the communication network 400. As previously described, the presence data is indicative of the presence of the second device 200 within the viewing area A1 of the display screen 150 of the first device 100. The presence data may indicate that the second device 200 is present in the viewing area of the first device and/or that it is likely that the user U of the second device 200 is viewing the primary content displayed on the first device 100.

The presence data may be transmitted to the content provider system 300 by the first device 100. In that case, the presence data may further include information related to the second device 200, such as information characterizing the second device 200 and/or the user U of the second device 200. Examples of the presence data includes a second device's identifier, and/or an identifier, age, gender and/or location of the user U of the second device 200.

Alternatively, the presence data may be transmitted to the content provider system CPS 300 by the second device 100. In that case, the presence data may further include information related to the primary content displayed by the first device 100.

Such presence data can be obtained by the first device 100 from the second device 200 in the step 530.

The process 600 according to the third embodiment may include a step 670 of selecting the supplementary content in a library of contents. This step 670 can be performed by the content provider system or CPS 300. The selection can be based on the second device 200 and/or the primary content displayed on the first device 100. For that purpose, the content provider system 300 can use information related to the second device 200 and/or information related to the primary content, that is included in the received presence data or already known.

The selected supplementary content is transmitted by the content provider system 300 to the second device 200, through the communication network 400, in a step 675, and displayed on the display screen 210 of the second device 200, in a step 680. The supplementary content may be transmitted directly to the second device 200, or via the first device 100 through a wireless communication link between the first and second devices 100, 200.

Additionally, or alternatively, the supplementary content may be transmitted to and displayed by the first device 100, in the step 680.

Optionally, if the supplementary content is displayed on the first or second device 100, 200 while the presence of this second device 200 is detected within the viewing area A1 of the first device 100, a score associated with the second device 200 (e.g., a score attributed to the user U of the second device 200 in a loyalty program) may be increased by the content provider system 300 in a user database of the user management system 320.

Optionally, the process 600 may further include a step 685 of updating a score assigned to the user U of the second device 200, for example in a loyalty program, based on the supplementary content displayed on the first or second device 100, 200. For example, the greater the number of supplementary contents displayed, the higher the score.

The confidence level associated with a state of presence of the user U of the second device 200 within the viewing area A1 may be determined by the first device 100, based on the monitored activity of the second device 200, as previously described, and transmitted to the content provider system 300, in the third embodiment. The content provider system 300 may use this confidence level to adjust the score assigned to the user U of the second device 200.

### Fourth embodiment

In a fourth embodiment, the predetermined process 600 is for managing parental controls on the first and/or second device 100, 200, based on the detection of presence or absence of the second device 200 within the viewing area A1.

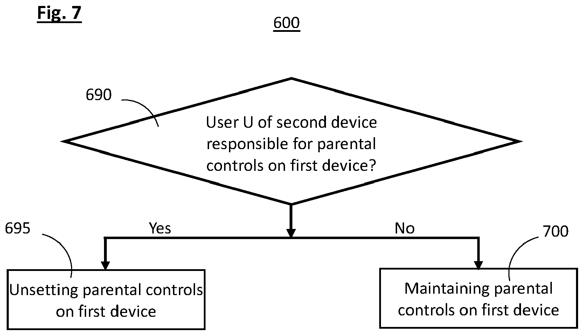

In a first variant of the fourth embodiment, illustrated in figure 7, the process is for automatically unsetting parental controls set on the first device 100 if the second device 200 is present in the viewing area A1 of the first device 100 and is associated with a user responsible for managing (i.e., setting and unsetting) the parental controls on the first device 100.

Let's consider that parental controls are set on the first device 100 and, at some point, the second device 200 enters the viewing area A1 associated with the first device 100. As a result, the first device 100 detects the presence of the second device 200 in the viewing area A1 in the step 525.

Parental controls can be set to regulate what contents can be viewed on the first device 100. The parental controls on the first device may be configured directly on the first device 100 and/or through the user management system 320. These parental controls can be set or unset for a specific user or user profile, for example in a user database of the user management system 320. Further, one or more users or user profiles may be responsible for managing (i.e., setting and unsetting) the parental controls on the first device 100 in the user database.

According to the first variant of the fourth embodiment, at step 690, the process 600 involves determining if the second device 200 detected in the viewing area A1 of the first device 100 is associated with a user or user profile responsible for the parental controls on the first device 100. The step 690 can be performed by the content provider system 300, particularly by the user management system. For that purpose, the first device 100 may transmit to the content provider system 300 identification information of the second device 200 and/or identification information of the user U of the second device 200, for example obtained in the data exchange step 530, and, in response to a request, receive the indication whether a user associated with the second device 200 is responsible for managing parental controls on the first device 100.

If it is determined that the second device 200 is associated with a user or user profile responsible for the parental controls on the first device 100 (step 690: Yes), the process 600 includes a step 695 of automatically unsetting the parental controls on the first device 100. This step 695 can be performed by the content provider system 300. In this way, the parental controls are automatically unset on the first device 100, upon detection of the presence of the second device 200 in the viewing area A1.

If it is determined that the second device 200 is not associated with a user or user profile responsible for the parental controls on the first device 100 (step 690: No), the parental controls set on the first device 100 are maintained in a step 700.

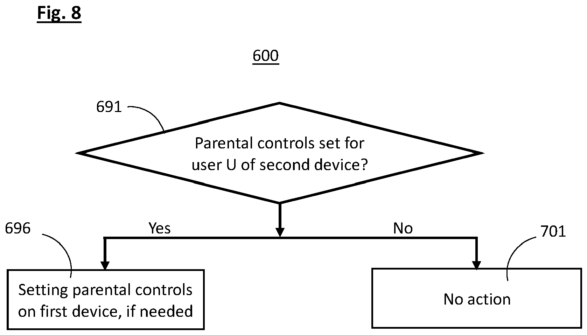

In a second variant of the fourth embodiment, illustrated in figure 8, the process is for automatically setting or unsetting parental controls on the first device 100 based on whether parental controls are set on the second device 200 and/or for a user or user profile associated with the second device 200.

Parental controls can be set to regulate what contents can be viewed on the second device 200. The parental controls on the second device 200 may be configured directly on the second device 200 and/or through the user management system 320. These parental controls can be set or unset for a specific user or user profile, for example in a user database of the user management system 320.

Let's consider that parental controls are set on the second device 200 and, at some point, the second device 200 enters the viewing area A1 associated with the first device 100. As a result, the first device 100 detects the presence of the second device 200 in the viewing area A1 in the step 525.

According to the second variant of the fourth embodiment, at step 691, the process 600 involves determining if parental controls are set on the second device 200. The step 691 can be performed by the first device 100. The first device 100 can determine if parental controls are set on the second device 200 in the step 530 of exchanging data between the first device 100 and the second device 200. Alternatively, the first device 100 can determine if parental controls are set on the second device 200 through the content provider system 300, particularly through the user management system 320. For that purpose, the first device 100 may transmit to the content provider system 300 identification information of the second device 200 and/or identification information of the user U of the second device 200, for example obtained in the data exchange step 530, and, in response to a request, receive from the user management system 320 an indication if parental controls are set on the second device 200.

If it is determined that parental controls are set on the second device 200 or for a user associated with the second device 200 (step 691: Yes), the process 600 includes a step 696 of automatically setting the same parental controls on the first device 100. This step 696 can be performed either directly by the first device 100, or through the content provider system 300. In this way, the parental controls are automatically set on the first device 100, upon detection of the presence of the second device 200 in the viewing area A1.

If it is determined that parental controls are not set on the second device 200 or for a user associated with the second device 200 (step 691: No), there may be no action taken to manage the parental controls on the first device 100, whether parental controls are set or not on the first device 100, in a step 701.

### Fifth embodiment

In a fifth embodiment, the predetermined process 600 is for user authentication, based on detection of the presence of the second device 200 in the viewing area A1. The user authentication process may be executed to authorize or grant the first device 100 access to a resource (e.g., data, service, application, system, etc.) based on an authentication of the user U of the second device 200. The user of the second device 200 may be authorized to access this resource. For example, it may be a service to which the user has subscribed, an account of the user on a service provider, etc.

In the fifth embodiment, the process 600 involves generating a token based on the detection of the presence of the second device 200 in the viewing area A1, and using this token as an authentication factor or element in a user authentication process.

The process 600 according to the fifth embodiment includes a step 710 of generating a token, performed by the first device 100. The token can include identification information related to the second device 200, said identification information identifying the second device 200 or the user U of the second device 200 (e.g., a device identifier (ID), or a user identifier (ID)), and an indication that the second device 200 is present in the viewing area A1 of the first device 100. The identification information can be obtained by the first device 100 in the step 530 of exchanging data between the two devices 100, 200. The token can be signed by the first device 100 with a cryptographic key of the first device 100 (e.g., a private asymmetric key of a pair of asymmetric keys, or a secret symmetric key). This cryptographic key may be securely pre-stored in a memory of the first device 100. Alternatively, or additionally, the token could be at least partially encrypted with the cryptographic key.

Then, in a step 715, the first device 100 executes an authentication process to verify the identity of the user of the second device 200 before granting access to resources like data, systems, services, applications, etc. These resources may be on the first device 100 or on a remote device or system accessible from or via the first device 100 through the communication network 400.

The authentication process may be a multi-factor authentication (MFA) which requires to provide two or more different factors or elements to verify the user's identity. These elements include at least two of the following categories:
- Something You Know like a password or a PIN;
- Something You Have such as a smartphone app to approve authentication requests or a token;
- Something You Are involving biometrics, such as a fingerprint or face scan.

In the process 600 according to the fifth embodiment, the element "Something You Have" includes the token generated in the step 715. This token is provided in the MFA process as one of the two or more elements of authentication. One or more other elements of authentication can be provided in the above mentioned categories.

Multiple actors may be involved in executing the authentication process like at least part of the second device 200, the user of the second device 200, the first device 100, an authentication server, the content provider system 300, the user management system 320, etc.

Alternatively, the generated token could be used as an element of authentication in a single factor authentication (SFA), for example to access low sensible resources.

If the authentication process has been executed successfully, the first device 100 is granted access to the resource(s), in a step 725.

If the authentication process has failed, the first device 100 is denied access to the resource(s), in a step 730.

### Sixth embodiment

In a sixth embodiment, the predetermined process 600 is for automatically executing a software application, or software instructions, either on the first device 100 or on the second device 200, based on detection of the presence of the second device 200 in the viewing area A1.

In a first variant of the sixth embodiment, the process 600 is for automatically executing a remote control application on the second device 200. This remote control application is a software program designed to operate the first device 100 from a distance using the second device 200. It can mimic the functions of a traditional physical TV remote control, enabling users to change channels, adjust volume, and access other settings directly from the second device 200.

The process 600 may include a step 740 of monitoring an orientation of the second device 200 upon detection of the presence of the second device 600 in the viewing area A1. The step 740 is performed by the first device 100 using the UWB technology.

If it is detected that the second device 200 points to the first device 100 (step 745: Yes), the process 600 goes to a step 750 of automatically executing the remote control application on the second device 200.

If it is not detected that the second device 200 points to the first device 100 (step 745: No), the monitoring step 740 is carried out as long as the presence of the second device 200 is detected in the viewing area A1.

At step 755, after step 750, the process 600 involves operating the first device 100 in a remote manner using the second device 200 as remote control.

The monitoring step 740 may be optional. Alternatively, the step 750 of automatically executing the remote control application on the second device 200 may be executed directly upon detection of the presence of the second device 600 in the viewing area A1, without detecting that the second device 200 points to the first device 100.

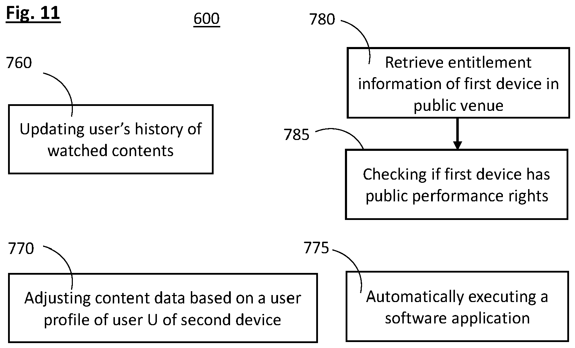

In other variants of the sixth embodiment, the predetermined process 600 involves automatically executing another type of software application, or software instructions, on the first device 100 and/or on the second device 200, based on detection of the presence of the second device 200 in the viewing area A1, in a step 775 (figure 11).

For example, the software application may be an application related to the content displayed on the display screen 150 of the second device 100 to allow for interactions between the second device 200 and said displayed content through inputs and/or movements of the second device 200. The movements of the second device 200 may be detected by the first device using the UWB technology. The inputs may be transmitted from the second device to the first device 100. The information related to the inputs and/or movements of the second device 200 may be transmitted to the content provider system 300, through the communication network 400, from the first device 100 and/or the second device 200.

### Other embodiments

In other embodiments, the predetermined process 600 may include other functionalities or operations, as described below with reference to figure 11.

In an embodiment, the process 600 may include a step of updating an history of contents viewed by the user U of the second device 200.

The history of viewed contents may be recorded in a user database of the user management system 320.

As previously mentioned, the first device 100 or the second device 200 may exchange data in the step 730. For example, the second device 200 may transmit to the first device 100 a user ID of the user of the second device 200 and/or a device ID of the second device 200. Then, the first device 100 may transmit presence data to the content provider system CPS 300, which includes the identification information of the user U of the second device 200 and/or the second device 200. The content provider system CPS 300 may know what content is displayed or rendered on the first device 100. Alternatively, the first device 100 may indicate what content is displayed on the display screen 150 of the first device 100. As the content provider system CPS 300 knows what content is displayed on the display screen 150 of the first device 100 and who is viewing it, it update a list of content watched by the user of the second device 200 by adding the viewed content.

Alternatively, the history of contents viewed by the user of the second device 200 may be recorded in a memory of the first device 100.

In an embodiment, in the process 600, the content data transmitted to the first device 100 and displayed on the display screen 150 may be filtered or adjusted based on a user profile or account of the user U of the second device 200. For example, the user profile of the user U may indicate if the user U has a valid subscription or not to a service without advertisement or has a given score in a loyalty program. Based on the user profile of the user U of the second device 200, the content provider system 300 may adjust or filter the content data transmitted to the first device 100 for example to add or remove some advertisements, in a step 770.

In an embodiment, in the process 600, the content data transmitted to the first device 100 and displayed on the display screen 150 may be adjusted based on a user profile or account of the user U of the second device 200, to customize a user interface rendered on the display screen 150 of the first device 100.

In an embodiment, the first device 100 is located in a public area or venue like a bar, restaurant, school, theater, etc. For contents like sport events, movies, music, television shows, etc., public performance rights are needed to show the contents in public venues. These rights are separate from those that allow an individual to view the same content at home. Without these rights, public venues can't legally display the content.

According to this embodiment, the process 600 is for determining if a content displayed by the first device 100 is legally displayed.

For that purpose, the second device 200 may enter the viewing area A1 of the first device 100 while the first device 100 displays a content on the display screen 150. Then, in a step 780, the second device 200 may obtain or retrieve entitlement information of the first device 100. The step 780 may be carried out during the data exchange 730 between both devices 100, 200. This entitlement information may include rights granted by the content provider system 300 to the first device 100 to access and display contents (e.g., TV channels, movies, services, etc.). To legally display the content in the public venue, the entitlement information should include public performance rights or similar. Then, the second device 200 checks if the first device 100 has public performance rights or similar to legally display the content, in a step 785. The result of this checking may be conveyed to the user U of the second device 200 through a user interface, and/or transmitted by the second device 200 to the content provider system 300 through the network 400.

The present system determines the presence of the second device 200 within the viewing area A1 associated with the display screen 150 to which the first device 100 is connected, by leveraging the capabilities of a wireless communication technology such as UWB, and then carries out one or more predetermined processes 600 that are based on presence detection of the device 200 within this specific viewing area A1. In some situations, a plurality of second devices 200 may be present within the viewing area A1. In such circumstances, the processes 600 may be carried out by taking into account the plurality of second devices 200 within the viewing area A1. In an embodiment, specific data related to each second device may be determined (e.g., presence data, user data, device data, and/or audience data, etc.) and optionally the specific data of the plurality of second devices within the viewing area A1 may be aggregated. The aggregated data and/or the set of specific data of each of the plurality of second devices 200 may be used in the processes 600. For example:
- aggregated audience data may be transmitted to the content provider system 300;
- switching content from the first device to another device may be performed for the second device that leaves or has left the viewing area A1, while the content is still being displayed on the display device 150 for the second device(s) staying within the viewing area A1;
- selecting (670) a supplementary content in a library of contents may be carried out based on aggregated presence data related to the plurality of second devices 200;
- setting or unsetting parental controls on the first device 100 may be performed based on the aggregated data (or the set of specific data of each second device) and optionally based on a predefined parental control setting rules;
- a token may be generated for authentication purpose and include the IDs of the different second devices and the indication that these second devices are present in the area A1;
- the content data may be adjusted based on the aggregated data (or the set of specific data of each second device).

The operations of the method 500 previously presented are intended to be illustrative. Method 500 may include one or more operations, functions, or actions, as illustrated by one or more of blocks and arrows. Although the blocks may be illustrated in a sequential order, these blocks may in some instances be performed in parallel, and/or in a different order than those described herein. Also, the various blocks may be combined into fewer blocks, divided into additional blocks, and/or removed based upon the desired implementation.

In addition, for the method 500 and other processes and methods disclosed herein, the flowcharts show functionality and operation of one possible implementation of present embodiments. In this regard, each block may represent a module, a segment, a portion of a manufacturing or operation process, or a portion of program code, which includes one or more instructions executable by a processor for implementing specific logical functions or steps in the process. The program code may be stored on any type of computer readable medium, for example, such as a storage device including a disk or hard drive. The computer readable medium may include non-transitory computer readable medium, for example, such as computer-readable media that stores data for short periods of time like register memory, processor cache and Random Access Memory (RAM). The computer readable medium may also include non-transitory media, such as secondary or persistent long term storage, like read only memory (ROM), optical or magnetic disks, compact-disc read only memory (CD-ROM), for example. The computer readable media may also be any other volatile or non-volatile storage systems. The computer readable medium may be considered a computer readable storage medium, for example, or a tangible storage device.

In addition, for the method 500 and other processes and methods disclosed herein, each block may represent circuitry that is wired to perform the specific logical functions in the process, for example.

### FINAL CONSIDERATIONS

Although an overview of the inventive subject matter has been described with reference to specific example embodiments, various modifications and changes may be made to these embodiments without departing from the broader spirit and scope of embodiments of the present invention. For example, various embodiments of features thereof may be mixed and matched or made optional by a person of ordinary skill in the art. Therefore, the Detailed Description is not to be taken in a limiting sense, and the scope of various embodiments is defined only by the appended claims, along with the full range of equivalents to which such claims are entitled.

## Claims

1. A method (500) comprising the steps of:
A- detecting (520, 525), by a first device (100) connected with a display screen (150), if a second device (200) is present in a viewing area (A1) of the display screen (150), said viewing area (A1) having predetermined boundaries (156, 157, 158), using a wireless communication technology allowing for a positioning of the second device (200) in space,
B- in response to a positive detection (525: Yes) in the step A, executing a predetermined process (600).

2. The method according to claim 1, wherein, in the step B, the predetermined process (600) is based on information characterizing a user of the second device (200).

3. The method according to claim 1 or 2, wherein, in the step B, the predetermined process (600) includes a step of transmitting presence data (610, 665) indicative of the presence of the second device within the viewing area (A1) of the display screen (150) to a content provider system (300).

4. The method according to any of claims 1 to 3, further comprising a step of displaying a content on the display screen (150) connected with the first device (100).

5. The method according to claim 4, wherein, in the step B, the predetermined process (300) is based on the displayed content.

6. The method according to claim 4 or 5 when dependent on claim 3, wherein the presence data includes audience data and, in the step B, the predetermined process (600) includes a step of audience measurement (635) to determine audience metrics related to the content displayed on the display screen (150), based on said audience data.

7. The method according to 6, wherein, in the step B, the predetermined process (600) includes:
- a step (620) of monitoring activity of the second device (200) in the viewing area (A1) ;
- if inactivity of the second device (200) is detected during a period exceeding a predetermined time threshold, a step (630) of decreasing a confidence level associated with a state of presence of a user of the second device (200) within the viewing area (A1);
wherein said confidence level is used in the determination of the audience metrics (635).

8. The method according to any of claims 4 to 7, wherein, in the step B, the predetermined process (600) includes a step of switching the display of the content from a display screen (210) of the second device (200) to the display screen (150) of the first device (100).

9. The method according to any of claims 4 to 8, further comprising, upon detection, in the step A, that the second device (200) is no longer present in the viewing area (A1) of the display screen (150) connected with the first device (100), a step of switching the display of the content from the display screen (150) connected with the first device to a display screen of the second device (200).

10. The method according to any of claims 4 to 8, further comprising:
- after detection (645), in the step A, that the second device (200) is no longer present in the viewing area (A1) of the display screen connected with the first device (100), a step (655) of detecting if the second device is present in another viewing area (A3) associated with a third device using the wireless communication technology allowing for the positioning of the second device (200) in space; and
- in a positive event (645: Yes), a step (660) of switching the display of the content from the display screen (150) of the first device (100) to a display screen of the third device.

11. The method according to any of claims 4 to 10, wherein, in the step B, the predetermined process (600) comprises a step (760) of updating an history of contents viewed by a user of the second device (200).

12. The method according to any of claims 4 to 11, wherein, in the step B, the predetermined process (600) includes:
- selecting (670) a supplementary content from a content database based on the second device (200) and/or the content displayed on the display screen connected with the first device (100);
- transmitting the supplementary content to the first device (100) and/or the second device (200) to display it.

13. The method according to claim 12, wherein, in the step B, the predetermined process (600) includes updating (685) a score assigned to a user of the second device (200) based on the displayed supplementary content.

14. The method according to any of claims 4 to 13, wherein, in the step B, the predetermined process (600) includes adjusting (770) content data transmitted to the first device (100) based on a user profile of a user (U) of the second device (200).

15. The method according to any of claims 1 to 14, wherein, in the step B, the predetermined process (600) includes:
- determining (690) if the user (U) of the second device (200) is responsible for managing parental controls to regulate what contents can be viewed on the first device (100);
- in a positive event (690: Yes), unsetting (695) the parental controls on the first device (100).

16. The method according to any of claims 1 to 15, wherein, in the step B, the predetermined process (600) includes:
- determining (691) if parental controls are set for a user (U) of the second device (200);
- in a positive event (691: Yes), setting said parental controls on the first device (100) to regulate what contents can be viewed on the first device (100).

17. The method according to any of claims 1 to 16, wherein, in the step B, the predetermined process (600) includes:
- a step (710) of generating a token including an identifier of the second device (200) and/or of a user (U) of the second device (200) and an indication that the second device (200) is present in the viewing area (A1) of the display screen connected with the first device (100); and
- an authentication step (715) wherein said token is used as an authentication factor.

18. The method according to claim 17, wherein, if the authentication step has succeeded (720: Yes), the predetermined process (600) further includes a step (725) of granting first device (100) access to resources.

19. The method according to any of claims 1 to 18, wherein, the second device (200) being a communication device connected to a communication network (400), in the step B, the predetermined process (600) includes a step of providing the first device with an access to the communication network (400) via a wireless connection with the second device (200).

20. The method according to any of claims 1 to 19, wherein, in the step B, the predetermined process (600) includes a step (775, 750) of automatically executing a software application by a processor of the second device (200) or first device (100).

21. The method according to claim 20, wherein the software application is an application of remote control (750) to remotely operate (755) the first device (100) from the second device (200).

22. The method according to claim 21, wherein, in the step B, the predetermined process (600) includes:
- a step (740) of monitoring an orientation of the second device (200); and
- a step (750) of automatically executing the software application of remote control upon detection that the orientation of the second device (200) points to the display screen (150) connected with the first device (100).

23. The method according to claim 20 when dependent on claim 4, wherein the software application is an application related to the content displayed on the display screen (150) connected with the first device (100) to allow for interactions between the second device (200) and the displayed content through inputs and/or movements of the second device (200), through a communication network (400).

24. The method according to any of claims 1 to 23, when dependent on claim 4, wherein the second device (200) communicates with the first device (100) to obtain entitlement information of the first device (100), and checks if the first device (100) has public performance rights to legally display the content in a public area based on the entitlement information.

25. The method according to any of claims 1 to 24, wherein the wireless communication technology allowing for positioning with centimeter-level accuracy is Ultra-Wideband, UWB, technology.

26. A system (1000) comprising a first device (100), a second device (200) and a content provider system (300), configured to perform the steps of the method according to any of claims 1 to 25.
